# EUROPEAN PATENT APPLICATION

(11) **EP 4 418 743 A1**
(43) Date of publication of application: **21.08.2024**
(21) Application number: 22880776.4
(22) Date of filing: 28.09.2022
(51) Int. Cl.: H04W 48/02, H04W 48/10, H04W 48/16

(54) **WIRELESS TERMINAL, RADIO ACCESS NETWORK NODE, AND METHODS THEREFOR**

(30) Priority: 13.10.2021 JP 2021168191
(71) Applicant: NEC Corporation, Tokyo 108-8001 (JP)
(72) Inventor: HAYASHI, Satoaki, Tokyo 108-8001 (JP)
(74) Representative: MacDougall, Alan John Shaw
(86) International application number: PCT/JP2022/036152
(87) International publication number: WO 2023/063080

(57) **Abstract**

A radio terminal (1) determines whether access by the radio terminal (1) to a serving cell (21) is barred by comparing a radio state of the serving cell (21) with a radio state of a neighbor cell (31) in the same frequency band as the serving cell (21). This can help, for example, to provide an appropriate access barring method for radio terminals located at cell boundaries between a serving cell and a neighbor cell that use the same frequency band.

## Description

### Technical Field

The present disclosure relates to radio communication networks, and in particular to restricting access of a radio terminal to a serving cell.

### Background Art

The 3rd Generation Partnership Project (3GPP (registered trademark)) standards have introduced several techniques for implementing the restricting or barring of access of radio terminals (i.e., User Equipments (UEs)) to a cell. Access barring allows a Radio Access Network (RAN) node (e.g., eNB, gNB) to prohibit (or bar) access of a part of the multiple UEs that have camped on a cell when the cell is under heavy load. If access barring is enabled, the UE shall does not initiate the establishment or resumption of a Radio Resource Control (RRC) connection for any access causes except for mobile terminated calls. These access barring techniques include, for example, Access Class Barring (ACB), Extended Access Barring (EAB), Application specific Congestion control for Data Communication (ACDC), and Unified Access Control (UAC). Of these, the EAB distinguishes Machine-Type Communications (MTC) devices and Internet of Things (IoT) devices from normal (or legacy) UEs, and enables specific access barring for MTC and IoT devices.

In addition, 3GPP Release 15 has introduced a Coverage Enhancement (CE) level-based access barring mechanism that allows Radio Access Network (RAN) nodes (e.g., eNBs, gNBs) to prohibit (or bar) access on a CE level basis. Specifically, when a cell is under heavy load, the RAN node can bar access of UEs belonging to a particular CE level and all CE levels above it. UEs at higher CE levels may be associated with higher resource consumption due to tens, hundreds, or even thousands of repetitions. Accordingly, barring access of UEs with higher CE levels can help reduce cell load.

The current 3GPP standards support up to four CE levels (i.e., CE levels 0 to 3). A UE determines its CE level based on a measured Reference Signal Received Power (RSRP) level. CE level 0 is associated with the highest RSRP threshold value and CE level 3 is associated with the lowest RSRP threshold value. In other words, UEs at CE level 0 enjoy relatively low path loss and high received power, while UEs at CE level 3 enjoy relatively high path loss and low received power.

Sections 5.3.3.12 and 5.3.3.14 of Non-Patent Literature 1 specify CE-level based access barring. Specifically, a RAN node can broadcast control information (i.e., eab-PerRSRP) about per-RSRP access barring, via System Information (i.e., System Information Block Type 14 (SIB14)) into a cell. The eab-PerRSRP indicates "thresh0", "thresh1", "thresh2", or "thresh3". If the eab-PerRSRP is set to the value "thresh0", the UE considers that access to that cell is barred when it is in enhanced coverage. If the eab-PerRSRP is set to the value "thresh1", the UE considers that access to the cell is barred when the measured RSRP is less than the first entry in a rsrp-ThresholdsPrachInfoList. Similarly, if the eab-PerRSRP is set to the value "thresh2", the UE considers access to the cell barred when the measured RSRP is less than the second entry in the rsrp-ThresholdsPrachInfoList. If the eab-PerRSRP is set to the value "thresh3", the UE considers access to the cell barred when the measured RSRP is less than the third entry in the rsrp-ThresholdsPrachInfoList. The rsrp-ThresholdsPrachInfoList is included in a PRACH-Config information element and is broadcast in the cell via system information (i.e., SIB type 2 (SIB2)).

These access barring techniques prevent UEs from accessing their serving cells in order to receive dedicated service. In particular, when a UE is in RRC_IDLE or RRC_INACTIVE, the serving cell of the UE can be said to be the cell on which the UE is camped. A serving cell is sometimes referred to as a camped cell. If a UE in RRC_IDLE or RRC_INACTIVE succeeds in selecting a suitable cell to camp on according to cell selection criteria or cell reselection criteria, it camps on that cell. Camping on a cell means that the UE has completed the cell selection or reselection process and has chosen a cell. In other words, the term "camp on" means that the UE has stayed in a cell and is ready to initiate a potential dedicated service in that cell. After camping on a cell according to a cell selection or cell reselection procedure, a UE performs an access barring check before accessing the camped cell (i.e., serving cell). Access barring allows intended UEs to avoid sending initial access messages for load control reasons.

Therefore, the access barring techniques are not used to control UEs' cell selection and reselection procedures. When selecting a cell to camp on, UEs ignore access barring. In other words, in cell selection or reselection procedures, UEs cannot reject a cell to camp on the grounds that access to that cell is not allowed due to access barring. For example, a UE is required to check access barring before the UE sends an initial RRC message (e.g., RRC Connection Request message, RRC Setup Request message, or RRC Resume Request message) to enter RRC_CONNECTED mode from RRC_IDLE (or RRC_INACTIVE) mode.

Meanwhile, the 3GPP Radio Access Network (RAN) Working Group is currently considering support for Reduced Capability (RedCap) UEs by New Radio (NR), which will be introduced in 3GPP Release 17 (See, for example, Non-Patent Literature 2). The introduction of RedCap NR devices will enable support for use cases that are not optimally served by the current NR standard. Use cases motivating the NR RedCap standardization effort include wearables (e.g., smart watches, wearable medical devices, Augmented Reality (AR)/Virtual Reality (VR) goggles), industrial wireless sensors, and video surveillance. These use cases have less stringent data rate requirements than the enhanced mobile broadband (eMBB) use case and do not have the tight or deterministic latency requirements of the time-critical communications use case. Thus, there is room to trade off device features for complexity or cost savings compared to Release 15 NR devices as a baseline. According to the currently proposed capabilities of the RedCap devices, the maximum device bandwidth, the minimum number of device receive branches, the maximum number of downlink MIMO layers, and the maximum downlink modulation order can be reduced or relaxed compared to those of the Release 15 NR devices.

Non-Patent Literature 3 raises issues related to cell selection and cell reselection by RedCap UEs. According to the current agreements, not all cells allow RedCap UEs to camp on them. Consider the case where only one of two cells in the same frequency band that are adjacent to each other allows RedCap UEs to camp on it. If one of these cells, which is the highest ranked cell in terms of reception quality level, does not allow RedCap UEs to camp on it, RedCap UEs may camp on to the other cell (e.g., the second highest ranked cell). In this case, the RedCap UE may experience interference from the adjacent cell, which has the highest reception quality level but does not allow RedCap UEs to camp on it. For this reason, Non-Patent Literature 3 states that solutions to potential interference issues for RedCap UEs need to be discussed.

### Citation List

### Non Patent Literature

[Non-Patent Literature 1] 3GPP TS 36.331 V15.14.0 (2021-06) "3rd Generation Partnership Project; Technical Specification Group Radio Access Network; Evolved Universal Terrestrial Radio Access (E-UTRA); Radio Resource Control (RRC); Protocol specification (Release 15)", June 2021
[Non-Patent Literature 2] Ericsson, " Revised WID on support of reduced capability NR devices", RP-211574, 3GPP TSG RAN Meeting #92e, Electronic Meeting, 14th - 18th June 2021
[Non-Patent Literature 3] CMCC, "Discussion on identification and access restrictions", R2-2108524, 3GPP TSG-RAN WG2 Meeting #115 electronic, Online, 16th - 27th August 2021

### Summary of Invention

### Technical Problem

The inventor has studied the barring or restriction of access of UEs to serving cells and found various problems.

One of these problems concerns a network where not all of the cells allow RedCap UEs to camp on them. Consider the case where only one of two cells in the same frequency band that are adjacent to each other allows RedCap UEs to camp on it. If one of these cells, which is the highest ranked cell in terms of reception quality level, does not allow RedCap UEs to camp on it, RedCap UEs may camp on to the other cell (e.g., the second highest ranked cell). In this case, RedCap UEs accessing their serving cell may cause interference problems with legacy UEs. For example, access to (or uplink transmission in) the serving cell by RedCap UEs may interfere with access to (or uplink transmission in) the neighbor cell by legacy UEs whose serving cell is the neighbor cell. Non-Patent Literature 3 states that solutions to potential interference issues for RedCap UEs need to be discussed, but does not provide specific solutions.

Another one of these problems concerns access barring to allow cell access by low-mobility UEs. The ACB provides barring based on access classes. An access class is an identifier assigned to each user by the network operator to indicate access priority and stored in a Subscriber Identity Module (SIM). The EAB provides barring for MTC devices and IoT devices. The ACDC provides selective barring of access attempts from specific applications. The UAC provides access barring based on access identifiers. An access identifier is determined by a UE based on an access class and access type (e.g., Mobile Terminated (MT) Access, Emergency, Delay Tolerant Service, Mobile Originated Multimedia Telephony Voice, Mobile Originated Multimedia Telephony Video, etc.). However, these existing access barring techniques are unable to restrict a UE's access to a serving cell based on the UE's mobility level.

One of the objects to be attained by example embodiments disclosed herein is to provide apparatuses, methods, and programs that contribute to solving at least one of a plurality of problems related to barring or restricting access of UEs to serving cells, including the problems described above. It should be noted that this object is merely one of the objects to be attained by the example embodiments disclosed herein. Other objects or problems and novel features will be made apparent from the following description and the accompanying drawings.

### Solution to Problem

In a first aspect, a radio terminal includes at least one memory and at least one processor coupled to the at least one memory. The at least one processor is configured to determine whether access by the radio terminal to a serving cell is barred by comparing a radio state of the serving cell with a radio state of a neighbor cell in the same frequency band as the serving cell.

In a second aspect, a method performed by a radio terminal includes determining whether access by the radio terminal to a serving cell is barred by comparing a radio state of the serving cell with a radio state of a neighbor cell in the same frequency band as the serving cell.

In a third aspect, a radio access network (RAN) node includes at least one memory and at least one processor coupled to the at least one memory. The at least one processor is configured to broadcast in a first cell an information element indicating a threshold value. The threshold value is used by a radio terminal using the first cell as a serving cell to determine whether access by the radio terminal to the serving cell is barred by comparing a radio state of the serving cell with a radio state of a neighbor cell in the same frequency band as the serving cell.

In a fourth aspect, a method performed by a RAN node includes broadcasting in a first cell an information element indicating a threshold value. The threshold value is used by a radio terminal using the first cell as a serving cell to determine whether access by the radio terminal to the serving cell is barred by comparing a radio state of the serving cell with a radio state of a neighbor cell in the same frequency band as the serving cell.

In a fifth aspect, a radio terminal includes at least one memory and at least one processor coupled to the at least one memory. The at least one processor is configured to determine whether access by the radio terminal to a serving cell is barred by comparing a current radio state of the serving cell with a historical radio state of the serving cell.

In a sixth aspect, a method performed by a radio terminal includes determining whether access by the radio terminal to a serving cell is barred by comparing a current radio state of the serving cell with a historical radio state of the serving cell.

In a seventh aspect, a RAN node includes at least one memory and at least one processor coupled to the at least one memory. The at least one processor is configured to broadcast in a first cell an information element indicating a threshold value. The threshold value is used by a radio terminal using the first cell as a serving cell to determine whether access by the radio terminal to the serving cell is barred by comparing a current radio state of the serving cell with a historical radio state of the serving cell.

In an eighth aspect, a method performed by a RAN node includes broadcasting in a first cell an information element indicating a threshold value. The threshold value is used by a radio terminal using the first cell as a serving cell to determine whether access by the radio terminal to the serving cell is barred by comparing a current radio state of the serving cell with a historical radio state of the serving cell.

In a ninth aspect, a radio terminal includes at least one memory and at least one processor coupled to the at least one memory. The at least one processor is configured to receive, via broadcast from a first cell, one or more information elements indicating one or both of S_{SearchThresholdP} and S_{SearchThresholdQ}. The S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection. The S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection. The at least one processor is configured to use one or both of the S_{SearchThresholdP} and the S_{SearchThresholdQ} when the radio terminal uses the first cell as the serving cell, also to determine whether access by the radio terminal to the serving cell is barred.

In a tenth aspect, a method performed by a radio terminal includes the steps of:
(a) receiving, via broadcast from a first cell, one or more information elements indicating one or both of S_{SearchThresholdP} and S_{SearchThresholdQ}, wherein
   the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection, and
   the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection; and
(b) using one or both of the S_{SearchThresholdP} and the S_{SearchThresholdQ} when the radio terminal uses the first cell as the serving cell, also to determine whether access by the radio terminal to the serving cell is barred.

In an eleventh aspect, a radio terminal includes at least one memory and at least one processor coupled to the at least one memory. The at least one processor is configured to determine whether access by the radio terminal to a serving cell is barred based on an amount of data stored in an uplink buffer of the radio terminal.

In a twelfth aspect, a method performed by a radio terminal includes determining whether access by the radio terminal to a serving cell is barred based on an amount of data stored in an uplink buffer of the radio terminal.

In a thirteenth aspect, a RAN node includes at least one memory and at least one processor coupled to the at least one memory. The at least one processor is configured to broadcast in a first cell an information element indicating a threshold value. The threshold value is used by a radio terminal using the first cell as a serving cell to determine whether access by the radio terminal to the serving cell is barred based on an amount of data stored in an uplink buffer of the radio terminal.

In a fourteenth aspect, a method performed by a RAN node includes broadcasting in a first cell an information element indicating a threshold value. The threshold value is used by a radio terminal using the first cell as a serving cell to determine whether access by the radio terminal to the serving cell is barred based on an amount of data stored in an uplink buffer of the radio terminal.

A fifteenth aspect is directed to a program. The program includes a set of instructions (software codes) that, when loaded into a computer, cause the computer to perform the method described in the second, fourth, sixth, eighth, tenth, twelfth, or fourteenth aspect.

### Advantageous Effects of Invention

According to the aspects described above, it is possible to provide apparatuses, methods and programs that contribute to solving at least one of a plurality of problems related to barring or restricting access of UEs to serving cells, including the problems described above.

### Brief Description of Drawings

Fig. 1 shows an example configuration of a radio communication system according to an example embodiment;
Fig. 2 shows an example of a control plane protocol stack of a radio terminal according to an example embodiment;
Fig. 3 is a flowchart showing an example of the operation of a radio terminal according to an example embodiment;
Fig. 4 is a diagram showing an example of the operation related to access barring performed by a radio terminal according to an example embodiment;
Fig. 5 is a diagram showing an example of the operation related to access barring performed by a radio terminal according to an example embodiment;
Fig. 6 is a flowchart showing an example of the operation of a radio terminal according to an example embodiment;
Fig. 7 is a flowchart showing an example of the operation of a radio terminal according to an example embodiment;
Fig. 8 is a flowchart showing an example of the operation of a radio terminal according to an example embodiment;
Fig. 9 is a block diagram showing an example configuration of a radio terminal according to an example embodiment; and
Fig. 10 is a block diagram showing an example configuration of a RAN node according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

The multiple example embodiments described below may be implemented independently or in combination, as appropriate. These example embodiments include novel features different from each other. Accordingly, these example embodiments contribute to attaining objects or solving problems different from one another and contribute to obtaining advantages different from one another.

The example embodiments shown below are described primarily for the 3GPP fifth generation mobile communication system (5G system). However, these example embodiments may be applied to other radio communication systems.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

### First Example Embodiment

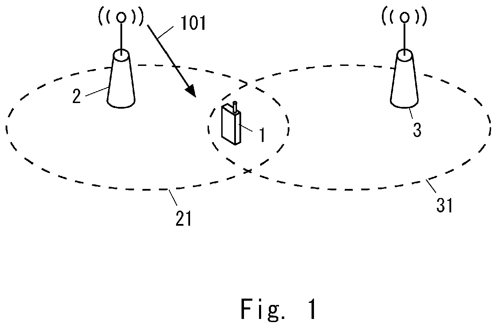

Fig. 1 illustrates an example of the configuration of a radio communication system related to a plurality of example embodiments, including this example embodiment. In the example of Fig. 1, the radio communication system includes a radio terminal (i.e., UE) 1, a radio access network (RAN) node (e.g., gNB) 2, and a RAN node 3. Each of the elements (network functions) shown in Fig. 1 can be implemented, for example, as a network element on dedicated hardware, as a software instance running on dedicated hardware, or as a virtualized function instantiated on an application platform.

The UE 1 has at least one radio transceiver and is configured to perform cellular communications with the RAN node 2. The UE 1 may be a Reduced Capability (RedCap) UE. RedCap UEs have limited capabilities compared to those of legacy UEs (e.g., Release 15 NR devices as a baseline). According to the currently proposed capabilities of the RedCap devices, the maximum device bandwidth, the minimum number of device receive branches, the maximum number of downlink MIMO layers, and the maximum downlink modulation order may be reduced or relaxed compared to those of Release 15 NR devices. RedCap UEs may only operate in a single frequency band at a time and may not support carrier aggregation or dual connectivity.

The RAN node 2 is configured to manage a cell 21 and to perform cellular communications with a plurality of UEs, including the UE 1, using a cellular communication technology (e.g., NR radio access technology). The RAN node 3 is configured to manage a cell 31 and to perform cellular communications with a plurality of UEs using a cellular communication technology (e.g., NR radio access technology).

The RAN Node 2 may be a Central Unit (e.g., gNB-CU) in a Cloud RAN (C-RAN) deployment, or a combination of a CU and one or more Distributed Units (e.g., gNB-DUs). Similarly, the RAN node 3 may be a CU or may include a CU and one or more DUs. C-RAN is also referred to as CU/DU split. In addition, a CU may include a Control Plane (CP) unit (e.g., gNB-CU-CP) and one or more User Plane (UP) units (e.g., gNB-CU-UP). Accordingly, each of the RAN nodes 2 and 3 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The RAN node 2 broadcasts system information (SI) 101 in the cell 21. The system information 101 includes a Master Information Block (MIB) and a number of System Information Blocks (SIBs). The system information 101 is divided into Minimum SI and Other SI. The Minimum SI is always broadcast periodically and includes basic information required for initial access and information for acquiring any other SI. The Other SI includes all SIBs not broadcast in the Minimum SI. Specifically, the Minimum SI includes MIB and SIB Type 1 (SIB1), and the Other SI includes SIB types from SIB Type 2 (SIB2) and later. Each SIB in the Other SI is either always broadcast periodically, broadcast on demand upon request from UEs in RRC_IDLE or RRC_INACTIVE, or sent to UEs in RRC_CONNECTED via dedicated RRC signaling.

In the example in Fig. 1, the UE 1 has selected or reselected the cell 21 of the RAN node 2 and has camped on to cell 21. In other words, the cell 21 is a serving cell of the UE 1. Meanwhile, the cell 31 is a neighbor (neighbour, neighbouring, adjacent) cell of the serving cell 21 of the UE 1. The cell 21 and the cell 31 may operate in the same frequency band or in different frequency bands. The cell 31 may be imposed with cell reservations for controlling the cell selection and cell reselection procedures. To control cell selection and reselection by UEs, cell reservations use control information contained in the Minimum SI (i.e., MIB and SIB1) (e.g., "CellBarred" in MIB or "cellReservedForOtherUse", "cellReservedForOtherUse", or "cellReservedForOtherUse" in SIB1). The control information for cell reservations transmitted in the Minimum SI of the cell 31 may indicate that the UE 1 is prohibited from cell selection or cell reselection of the cell 31. In addition, the Minimum SI of the cell 31 (e.g., "intraFreqReselection" in MIB) may indicate that intra-frequency reselection is allowed. In this case, the UE 1 will camp on the cell 21 of the same frequency band as the cell 31, even if the cell 31 is the highest ranked cell according to the cell reselection criteria.

In addition to the cell 31, one or more other neighbor cells may be present in the vicinity of the cell 21. Some or all of these other neighbor cells may operate in the same frequency band as the cell 21.

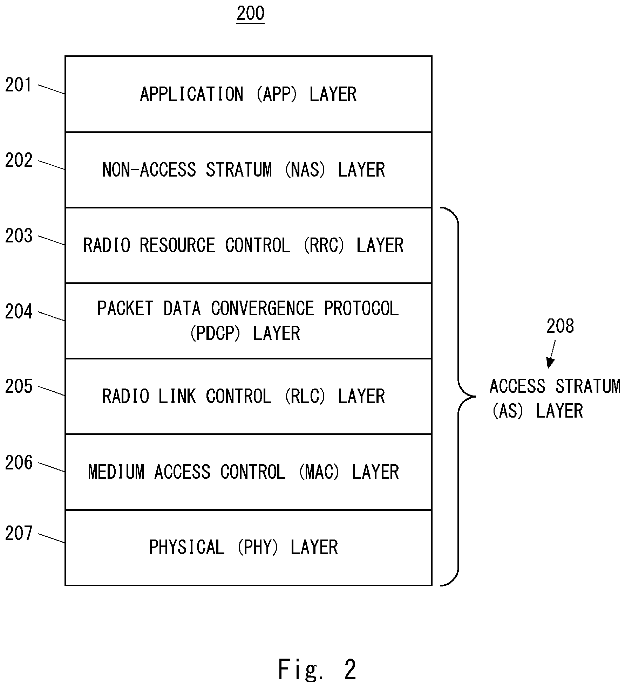

Fig. 2 shows an example of the control plane protocol stack of the UE 1. The control plane protocol stack 200 of the UE 1 includes an Application (APP) layer 201, a Non-Access Stratum (NAS) layer 202, and an Access Stratum (AS) layer 208. The AS layer 208 includes an RRC layer 203, a PDCP layer 204, an RLC layer 205, a MAC layer 206, and a PHY layer 207.

The NAS layer 202 utilizes data communication over a radio interface and management of the radio interface provided by the AS layer 208 and communicates with a core network (i.e., 5G Core (5GC)) via the RAN node 2 according to the 5G System (5GS) Mobility Management (5GMM) protocols and the 5GS Session Management (5 GSM) protocols. The 5GMM protocol runs between the UE 1 and an Access and Mobility Management Function (AMF) within the 5GC and is used for UE registration, mobility, and transport of 5GSM protocol messages. The 5GSM protocol runs between the UE 1 and a Session Management Function (SMF) within the 5GC via the AMF and supports management of PDU Session connectivity.

The NAS layer 202 communicates with the RRC layer 203 to utilize services provided by the AS layer 208 (i.e., data communication over the radio interface between the UE 1 and the RAN node 2 and management of the radio interface). The RRC layer 203 is a lower layer of the NAS layer 202 and provides radio resource control (RRC) and manages the RRC state (i.e., RRC_IDLE, RRC_INACTIVE, and RRC_CONNECTED) of the UE 1.

The AS layer 208 initiates an RRC connection establishment procedure or an RRC connection resume procedure in response to a request from the NAS layer 202 or on a voluntary basis. For example, in response to receiving a PDU Session establishment request from an upper layer (i.e., Application layer 201), if the 5GS mobility management (5GMM) mode is 5GMM-IDLE, the NAS layer 202 initiates a registration procedure or a service request procedure to transition to 5GMM-CONNECTED mode and attempt to send an initial NAS message (e.g., a registration request message or a service request message) to the AMF. The initial NAS message from the NAS layer 202 triggers the AS layer 208 to establish an RRC connection between the UE 1 and the RAN node 2.

The AS layer 208 performs an access barring check as described below. Note that the access barring check is performed after the UE 1 selects a cell to camp on in a cell selection procedure and when the UE 1 accesses that cell (i.e., a serving cell). In other words, the access barring check is not performed in a cell selection or reselection procedure where the UE 1 selects a cell to camp on. In this respect, the access barring check differs from cell reservation for controlling cell selection and cell reselection procedures.

In some implementations, the RRC layer 203 may perform the access barring check. In this case, the RRC layer 203 may perform the access barring check in response to the initiation of an RRC connection establishment procedure or an RRC connection resume procedure to the serving cell. The RRC layer 203 may perform the access barring check when an upper layer (i.e., the NAS layer) requests or triggers the establishment of an RRC connection. The RRC layer 203 may perform the access barring check when an upper layer (i.e., the NAS layer) or the RRC layer 203 requests or triggers the resumption of an RRC connection. In other implementations, the MAC layer 206 may perform the access barring check. In this case, the MAC layer 206 may perform the access barring check in response to the initiation of a random access procedure to the serving cell. A random access procedure is also referred to as a Random Access Channel (RACH) procedure. The MAC layer 206 may perform the access barring check when the MAC layer 206 is triggered to initiate a random access procedure.

In addition, the AS layer 208 may perform one or more additional access barring checks. By way of example, but not limitation, the additional access barring checks may include one or any combination of the existing ACB, EAB, ACDC or UAC, or may include barring or restriction(s) similar to these existing access barring. The EAB distinguishes Machine-Type Communications (MTC) devices and Internet of Things (IoT) devices from normal (or legacy) UEs, and enables specific access barring for MTC and IoT devices.

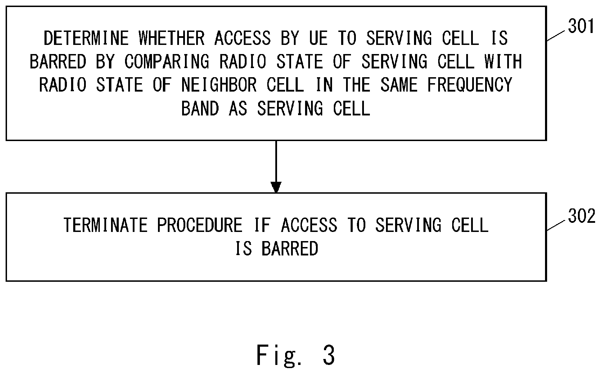

Fig. 3 shows an example of the operation related to an access barring check performed by the AS layer 208 of the UE 1. Here, the UE 1 has camped on the cell 21. In other words, the cell 21 is a serving cell of the UE 1. In step 301, the UE 1 determines whether access by the UE 1 to the serving cell (i.e., cell 21) is barred by comparing a radio state of the serving cell (i.e., cell 21) with a radio state of a neighbor cell (e.g., cell 31) in the same frequency band as the serving cell. The radio state of the serving cell may be rephrased as, for example, radio quality, channel state, channel quality, downlink signal state, or downlink signal quality of the serving cell. If there are multiple neighbor cells in the same frequency band as the serving cell, the UE 1 may select the highest ranked cell among the multiple neighbor cells according to the cell reselection criteria (e.g., R criteria) as the cell for comparison. Barred access to the serving cell means that the establishment or resumption of an RRC connection with the serving cell is barred. Alternatively, barred access to the serving cell means that random access to the serving cell is barred.

If access to the serving cell is barred, the UE 1 terminates the procedure (step 302). In implementations where the RRC layer 203 performs the barring check, the procedure to be terminated may be an RRC connection establishment procedure or an RRC connection resume procedure. If the RRC layer 203 determines that access to the serving cell is barred, it may inform the upper layer (i.e., NAS layer) of the failure to establish or resume the RRC connection. On the other hand, in implementations where the MAC layer 206 performs the barring check, the procedure to be terminated may be a random access procedure.

In an example, the UE 1 may compare a first metric that increases as the radio state of the serving cell improves with a second metric that increases as the radio state of the neighbor cell improves. More specifically, the UE 1 may determine that access to the serving cell is allowed if the second metric of the neighbor cell minus the first metric of the serving cell is less than a threshold value. In other words, the UE 1 may determine that access to the serving cell is barred if the second metric minus the first metric exceeds the threshold value. The threshold value may be a positive value. That is, if the radio state of the serving cell is lower than the radio state of the neighbor cell in the same frequency band by more than the threshold value, the UE 1 may determine that access to the serving cell is barred.

The UE 1 may receive an information element indicating the threshold value via broadcast from the serving cell (i.e., cell 21). The RAN node serving the serving cell (i.e., RAN node 2) may broadcast this information element via system information (e.g., SIB2) into the cell 21. The information element may specify an index from which the UE 1 can derive the threshold value.

The first metric described above may be related to the received signal power or received signal quality of a downlink signal of the serving cell. Similarly, the second metric may be related to the received signal power or received signal quality of a downlink signal of the neighbor cell. Each of the first metric and the second metric may include or be derived from Reference Signal Received Power (RSRP), Reference Signal Received Quality (RSRQ), or signal-to-interference-plus-noise power ratio (SINR) measured by the UE 1. More specifically, each of the first metric and the second metric may be or be derived from Synchronization Signal (SS) RSRP, SS-RSRQ, or SS-SINR.

Each of the first metric and the second metric may be a parameter derived or calculated from measured RSRP or RSRQ. The first metric may be Srxlev of the serving cell. Alternatively, the first metric may be Squal of the serving cell. Srxlev is a cell selection RX level value (dB). Squal is a cell selection quality value (dB). Srxlev and Squal are parameters also used in the Cell Selection Criterion (i.e., S-criterion). Srxlev is calculated using a measured RSRP value (Qᵣₓₗₑᵥₘₑₐₛ) of the serving cell. Squal is calculated using a measured RSRQ value (Q_{qualmeas}) of the serving cell. In this case, the second metric may be a parameter (e.g., Srxlev_{Bestcell}, Squal_{Bestcell}) corresponding to Srxlev or Squal, calculated based on the RSRP or RSRQ of the neighbor cell in the same frequency band as the serving cell.

In another example, the UE 1 may use a third metric that increases as the radio state of the serving cell improves and decreases as the radio state of the neighbor cell improves. The UE 1 may determine that access to the serving cell is allowed if the third metric is greater than a threshold value. The third metric may include or be derived from RSRQ or SINR of a downlink signal of the serving cell. More specifically, the third metric may be or may be derived from SS-RSRQ or SS-SINR of the serving cell. For example, SS-RSRQ is defined as the ratio N×SS-RSRP/NR carrier RSSI. N is the number of resource blocks in the RSSI measurement bandwidth. The NR carrier RSSI can be said to reflect the radio state of the neighbor cell in the same frequency band as the serving cell. Accordingly, SS-RSRQ can be said to be inversely proportional to the radio state of the neighbor cell through the NR carrier RSSI in its denominator. On the other hand, SS-SINR is obtained by dividing the linear average of the power contribution (in Watt) of the resource elements carrying the CSI reference signals in the serving cell by the linear average of the noise and interference power contributions (in Watt) of the resource elements carrying the CSI reference signals within the same frequency bandwidth. Thus, SS-SINR can be said to be inversely proportional to the radio state of the neighbor cell through the linear average of the noise and interference power contributions in its denominator.

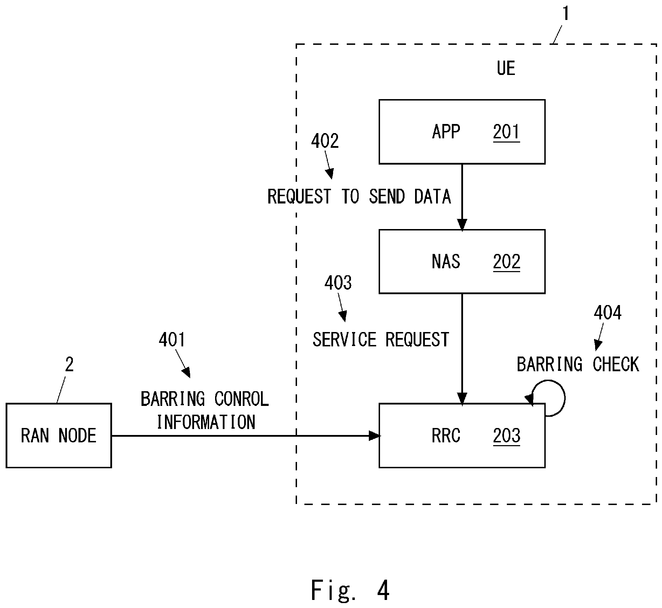

Fig. 4 shows an example in which the RRC layer 203 of the UE 1 performs the barring check described above. In step 401, the RAN node 2 sends barring control information to the UE 1. The barring control information includes the threshold value described above. The RAN node 2 may include the barring control information in the broadcast information (e.g., SIB) to be broadcast in the cell 21 to allow UEs in RRC_IDLE or RRC_INACTIVE to receive the barring control information. The RAN node 2 may transmit the barring control information per Public Land Mobile Network (PLMN) Identity that is broadcast in the cell 21.

In step 402, the NAS layer 202 receives a request for data transmission (in other words, a session establishment request) from the application layer 201. In step 403, in response to receiving the request for data transmission, the NAS layer 202 passes an initial NAS message (i.e., a registration request message or a service request message) to the RRC layer 203. In step 404, in response to receiving the initial NAS message, the RRC layer 203 performs the access barring check described with reference to Fig. 3. This check uses the threshold value contained in the barring control information (step 401). The RRC layer 203 may additionally perform one or more other access barring checks.

The triggering to the RRC layer 203 of the access barring check is not limited to the example of Fig. 4. For example, the RRC layer 203 may perform the access barring check (404) when the RRC layer 203 requests or triggers the resumption of an RRC connection.

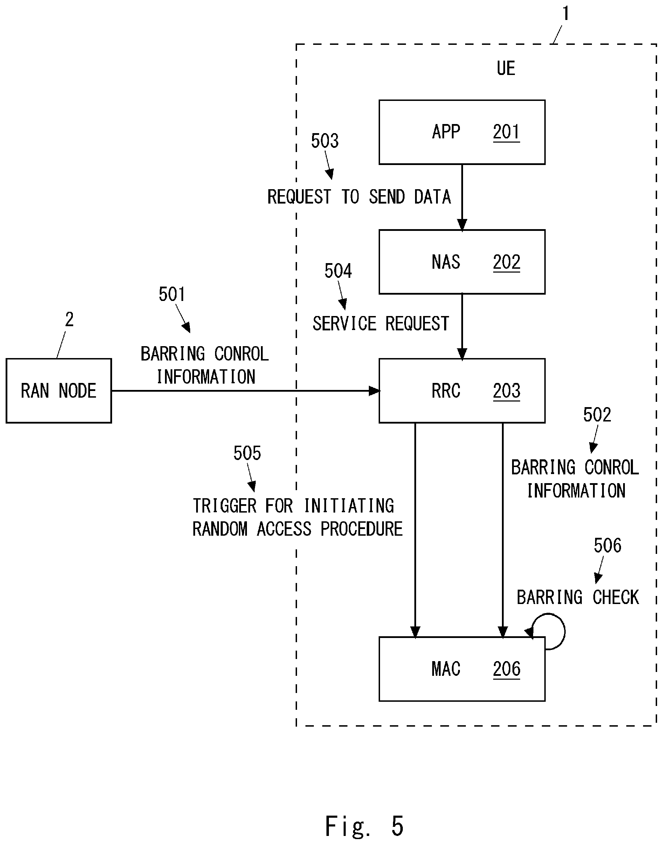

Fig. 5 shows an example of the MAC layer 206 of the UE 1 performing the barring check described above. Step 501 is similar to step 401 in Fig. 4. That is, the RAN node 2 sends barring control information to the UE 1. The barring control information includes the threshold value described above. In step 502, the RRC layer 203 passes the received barring control information (i.e., the threshold values) to the MAC layer 206. In other words, the RRC layer 203 configures the MAC layer 206 with the received barring control information (i.e., the threshold values).

Steps 503 and 504 are similar to steps 402 and 403 in Fig. 4. In step 505, in response to receiving an initial NAS message, the RRC layer 203 requests or triggers the MAC layer 206 to initiate a random access procedure, in order to send an RRC message (i.e., an RRC Setup Request message or an RRC Resume Request message) to establish or resume an RRC connection. In step 506, in response to receiving the trigger for a random access procedure, the MAC layer 206 performs the access barring check described with reference to Fig. 3. This check uses the threshold value contained in the barring control information (step 501).

The triggering to the MAC layer 206 of the access barring check is not limited to the example of Fig. 5. For example, the MAC layer 206 may receive a trigger for a random access procedure based on other events from the RRC layer 203, such as the reestablishment of an RRC connection, and perform the access barring check in response to receiving that trigger. The MAC layer 206 may perform the access barring check (step 404) when a random access procedure is initiated by the MAC layer 206 itself or by a Physical Downlink Control Channel (PDCCH) order.

According to the access denial or access restriction described with reference to Figs. 3 to 5, the UE 1 considers both the radio state of the serving cell and the radio state of a neighbor cell operating in the same frequency band as the serving cell to determine whether access to the serving cell is allowed or not. For example, if the radio state of the serving cell is lower than the radio state of a neighbor cell in the same frequency band by more than a threshold value, the UE 1 may determine that access to the serving cell is barred. According to such an operation, access to the serving cell by the UE 1 is barred when the UE 1 is located on a cell boundary between the serving cell and the neighbor cell that use the same frequency band. This can prevent uplink transmissions from the UE 1 (e.g., RedCap UE) to the serving cell from interfering with uplink transmissions from other UEs (e.g., legacy UEs) to the neighbor cell.

### Second Example Embodiment

This example embodiment provides another example of an access barring check performed by the UE 1. An example configuration of a radio communication system according to this example embodiment may be similar to the example shown in Fig. 1. The control plane protocol stack of the UE 1 may be similar to the example shown in Fig. 2.

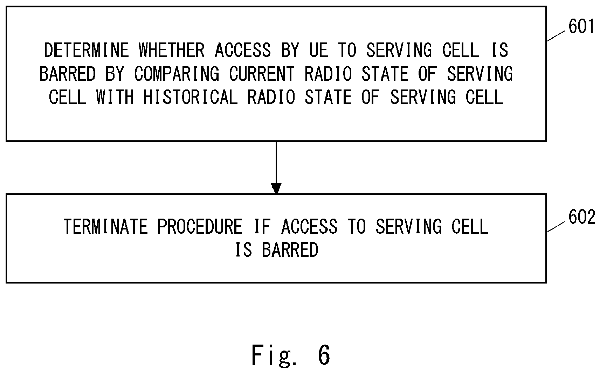

Fig. 6 shows an example of the operation related to an access barring check performed by the AS layer 208 of the UE 1. Here, the UE 1 has camped on the cell 21. In other words, the cell 21 is a serving cell of the UE 1.

In some implementations, the RRC layer 203 may perform the access barring check. In this case, the RRC layer 203 may perform the access barring check in response to the initiation of an RRC connection establishment procedure or an RRC connection resume procedure to the serving cell. The RRC layer 203 may perform the access barring check when an upper layer (i.e., the NAS layer) requests or triggers the establishment of an RRC connection. The RRC layer 203 may perform the access barring check when an upper layer (i.e., the NAS layer) or the RRC layer 203 requests or triggers the resumption of an RRC connection. In other implementations, the MAC layer 206 may perform the access barring check. In this case, the MAC layer 206 may perform the access barring check in response to the initiation of a random access procedure to the serving cell. The MAC layer 206 may perform the access barring check when the MAC layer 206 is triggered to initiate a random access procedure.

In step 601, the UE 1 determines whether access by the UE 1 to the serving cell is barred by comparing the current radio state of the serving cell with a historical radio state of the serving cell. The radio state of the serving cell may be rephrased as, for example, radio quality, channel state, channel quality, downlink signal state, or downlink signal quality of the serving cell. Barred access to the serving cell means that the establishment or resumption of an RRC connection with the serving cell is barred. Alternatively, barred access to the serving cell means that random access to the serving cell is barred.

If access to the serving cell is barred, the UE 1 terminates the procedure (step 602). In implementations where the RRC layer 203 performs the access barring check, the procedure to be terminated may be an RRC connection establishment procedure or an RRC connection resume procedure. If the RRC layer 203 determines that access to the serving cell is barred, it may inform the upper layer (i.e., NAS layer) of the failure to establish or resume the RRC connection. On the other hand, in implementations where the MAC layer 206 performs the access barring check, the procedure to be terminated may be a random access procedure.

In an example, the UE 1 may compare the current value of a metric that increases as the radio state of the serving cell improves with a reference value that is based on a historical value of the metric. More specifically, the UE 1 may determine that access to the serving cell is allowed if the reference value of the metric minus the current value of the metric is less than a threshold value. In other words, the UE 1 may determine that access to the serving cell is barred if the reference value of the metric minus the current value of the metric is greater than the threshold value. The threshold value may be a positive value.

The reference value based on the historical value of the metric may be the maximum (or best) value of the metric within the most recent predetermined period. The UE 1 may set the reference value to the current value of the metric if the current value of the metric is greater than the reference value or if the reference value minus the current value has been above the threshold value for a specified period of time. In other words, the reference value of the metric may be replaced by the current value of the metric. This means that if the current radio state of the serving cell is lower than the best radio state of the serving cell in the past (or within the last predetermined period) by more than the threshold value, then the UE 1 may determine that access to the serving cell is barred.

The UE 1 may receive an information element indicating the threshold value via broadcast from the serving cell (i.e., cell 21). The RAN node serving the serving cell (i.e., RAN node 2) may broadcast this information element via system information (e.g., SIB2) into the cell 21. The information element may specify an index from which the UE 1 can derive the threshold value.

The metric described above may be related to the received signal power or received signal quality of a downlink signal of the serving cell. The metric may include or be derived from RSRP, RSRQ, or SINR measured by the UE 1. More specifically, the metric may be or be derived from SS-RSRP, SS-RSRQ, or SS-SINR.

The metric may be a parameter derived or calculated from measured RSRP or RSRQ. The metric may be Srxlev of the serving cell. Alternatively, the metric may be Squal of the serving cell. Srxlev is a cell selection RX level value (dB). Squal is a cell selection quality value (dB). Srxlev and Squal are parameters also used in the Cell Selection Criterion (i.e., S-criterion). Srxlev is calculated using a measured RSRP value (Qᵣₓₗₑᵥₘₑₐₛ) of the serving cell. Squal is calculated using a measured RSRQ value (Q_{qualmeas}) of the serving cell.

In the case where the metric is Srxlev of the serving cell, the threshold value described above may be common to the threshold parameter, S_{SearchDeltaP}, defined for the relaxed measurement criterion for UE with low mobility. In other words, the threshold value parameter, S_{SearchDeltaP}, defined for the relaxed measurement criterion for UE with low mobility may be reused as the threshold value for the barring check described with reference to Fig. 6. Furthermore, the predetermined period described above may be common to the period parameter, T_{SearchDeltaP}, defined for the relaxed measurement criterion for UE with low mobility. By reusing the parameter(s) for the relaxed measurement as for the access barring check, the size of the data transmitted or broadcast by the RAN node 2 can be reduced. The relaxed measurement is also referred to as relaxed monitoring for cell reselection. The relaxed measurement enables UEs (e.g., IoT devices) to reduce the monitoring time of neighboring cells, thereby reducing the power consumption of their batteries.

According to the access barring or restriction described with reference to Fig. 6, the UE 1 considers the current and historical radio state of the serving cell to determine whether access to the serving cell is allowed or not. For example, if the current radio state of the serving cell is lower than the historical radio state by more than a threshold value, the UE 1 may determine that access to the serving cell is barred. If the difference between the current radio state and the historical radio state of the serving cell measured by the UE 1 is small, it is likely that the UE 1 is low mobility or stationary. Thus, according to such an operation, access to the serving cell by the UE 1 can be allowed when the UE 1 is low mobility or stationary. This can provide access barring to allow cell access primarily by low mobility UEs. The access barring or restriction described with reference to Fig. 6 can provide a solution to the problem of how to provide access barring to allow cell access primarily by low mobility UEs.

For example, there may be a scenario where a particular cell primarily serves RedCap UEs with a particular type of usage. For example, there might be a scenario where a particular cell in a factory primarily serves RedCap UEs (e.g., wireless sensors) that are stationary. Another scenario might be to primarily serve video surveillance RedCap UEs in a stadium. Video surveillance RedCap UEs can store the data they collect while moving and upload the stored data when they are stationary and have good radio conditions. For example, the access barring or restriction described in this example embodiment is effective in these scenarios.

### Third Example Embodiment

This example embodiment provides another example of an access barring check performed by the UE 1. An example configuration of a radio communication system according to this example embodiment may be similar to the example shown in Fig. 1. The control plane protocol stack of the UE 1 may be similar to the example shown in Fig. 2.

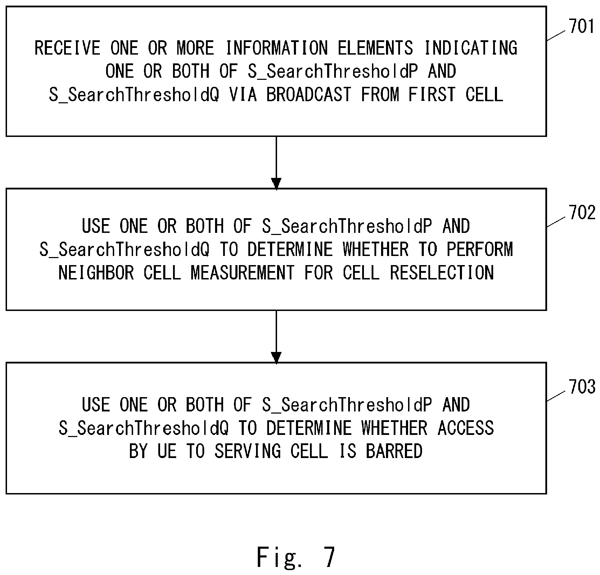

Fig. 7 shows an example of the operation of the UE 1. Here, the cell 21 is the cell on which the UE 1 has camped and is therefore a serving cell of the UE 1.

In step 701, UE 1 receives one or more information elements indicating one or both of S_{SearchThresholdP} and S_{SearchThresholdQ} via broadcast from the cell 21. For example, the information element(s) may be included in SIB 1 or SIB 2. SsearchThresholdP and S_{SearchThresholdQ} are used in determining the relaxed measurement criterion for UE not at cell edge. The relaxed measurement is also referred to as relaxed monitoring for cell reselection. The relaxed measurement enables UEs (e.g., IoT devices) to reduce the monitoring time of neighboring cells, thereby reducing the power consumption of their batteries.

In step 702, while the UE 1 is using cell 21 as a serving cell, the UE 1 uses S_{SearchThresholdP} to determine whether or not to perform a neighbor cell measurement for cell reselection. In addition, if S_{SearchThresholdQ} is configured, the UE 1 also uses S_{SearchThresholdQ} to determine whether to perform a neighbor cell measurement for cell reselection when the UE 1 is using cell 21 as a serving cell.

Specifically, S_{SearchThresholdP} is a threshold value that is compared to Srxlev. S_{SearchThresholdQ}, on the other hand, is a threshold value that is compared to Squal. Srxlev is a cell selection reception (RX) level value (dB). Squal is a cell selection quality value (dB). Srxlev and Squal are parameters also used in the Cell Selection Criterion (i.e., S-criterion). Srxlev is calculated using a measured RSRP value (Qᵣₓₗₑᵥₘₑₐₛ) of the serving cell. Squal is calculated using a measured RSRQ value (Q_{qualmeas}) of the serving cell. For example, if Srxlev is greater than S_{SearchThresholdP} and other predefined conditions are also met, the UE 1 may choose not to perform neighbor cell measurements. Alternatively, if Srxlev is greater than S_{SearchThresholdP} and other predefined conditions are also met, the UE 1 may choose to perform relaxed measurements.

In step 703, the UE 1 performs an access barring check. While the UE 1 is using the cell 21 as a serving cell, the UE 1 also uses one or both of S_{SearchThresholdP} and S_{SearchThresholdQ} to determine whether access by the UE 1 to the serving cell is barred. The UE 1 uses one or both of S_{SearchThresholdP} and S_{SearchThresholdQ} to determine whether access to the serving cell by the UE 1 is barred or not. For example, the UE 1 may determine that access to the serving cell is allowed if Srxlev is greater than S_{SearchThresholdP}. Alternatively, the UE 1 may determine that access to the serving cell is allowed if Srxlev is greater than SsearchThreshoidP and Squal is greater than SsearchThreshoidQ.

In some implementations, the RRC layer 203 may perform the access barring check. In this case, the RRC layer 203 may perform the access barring check in response to the initiation of an RRC connection establishment procedure or an RRC connection resume procedure to the serving cell. The RRC layer 203 may perform the access barring check when an upper layer (i.e., the NAS layer) requests or triggers the establishment of an RRC connection. The RRC layer 203 may perform the access barring check when an upper layer (i.e., the NAS layer) or the RRC layer 203 requests or triggers the resumption of an RRC connection. In other implementations, the MAC layer 206 may perform the access barring check. In this case, the MAC layer 206 may perform the access barring check in response to the initiation of a random access procedure to the serving cell. The MAC layer 206 may perform the access barring check when the MAC layer 206 is triggered to initiate a random access procedure.

According to the operation described with reference to Fig. 7, the UE 1 reuses one or both of S_{SearchThresholdP} and S_{SearchThresholdQ}, which are the threshold parameters for relaxed monitoring for cell reselection, for the access barring check. By reusing the parameter(s) for the relaxed measurement as for the access barring check, the size of the data transmitted or broadcast by the RAN node 2 can be reduced. In other words, the operation of the UE 1 described with reference to Fig. 7 can provide a solution to the problem of how to suppress the increase in the size of the data transmitted or broadcast by the RAN node 2 when new access barring is introduced.

### Fourth Example Embodiment

This example embodiment provides another example of an access barring check performed by the UE 1. An example configuration of a radio communication system according to this example embodiment may be similar to the example shown in Fig. 1. The control plane protocol stack of the UE 1 may be similar to the example shown in Fig. 2.

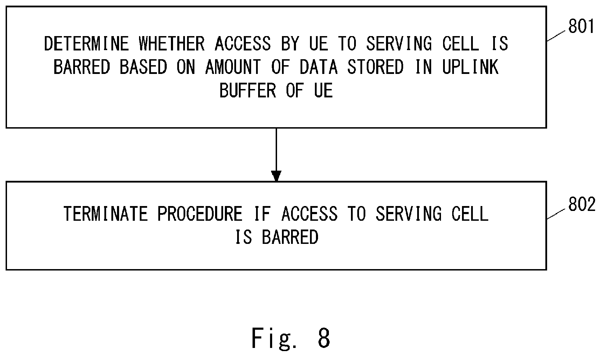

Fig. 8 shows an example of the operation related to an access barring check performed by the AS layer 208 of the UE 1. Here, the UE 1 has camped on the cell 21. In other words, the cell 21 is a serving cell of the UE 1.

In some implementations, the RRC layer 203 may perform the access barring check. In this case, the RRC layer 203 may perform the access barring check in response to the initiation of an RRC connection establishment procedure or an RRC connection resume procedure to the serving cell. The RRC layer 203 may perform the access barring check when an upper layer (i.e., the NAS layer) requests or triggers the establishment of an RRC connection. The RRC layer 203 may perform the access barring check when an upper layer (i.e., the NAS layer) or the RRC layer 203 requests or triggers the resumption of an RRC connection. In other implementations, the MAC layer 206 may perform the access barring check. In this case, the MAC layer 206 may perform the access barring check in response to the initiation of a random access procedure to the serving cell. The MAC layer 206 may perform the access barring check when the MAC layer 206 is triggered to initiate a random access procedure.

In step 801, the UE 1 determines whether access by the UE 1 to the serving cell is barred based on the amount of data stored in an uplink buffer of the UE 1. The uplink buffer stores uplink data to be transmitted. The uplink buffer can be managed at the PDCP layer, the RLC layer, or the MAC layer. Specifically, the UE 1 may determine that access to the serving cell is allowed if the amount of data stored in the uplink buffer is above a threshold value. In other words, the UE 1 may determine that access to the serving cell is barred if the amount of data stored in the uplink buffer is below the threshold value. Barred access to the serving cell means that the establishment or resumption of an RRC connection with the serving cell is barred. Alternatively, barred access to the serving cell means that random access to the serving cell is barred.

The UE 1 may receive an information element indicating the threshold value via broadcast from the serving cell (i.e., cell 21). The RAN node serving the serving cell (i.e., RAN node 2) may broadcast this information element via system information (e.g., SIB2) into the cell 21. The information element may specify an index from which the UE 1 can derive the threshold value.

If access to the serving cell is barred, the UE 1 terminates the procedure (step 802). In implementations where the RRC layer 203 performs the barring check, the procedure to be terminated may be an RRC connection establishment procedure or an RRC connection resume procedure. If the RRC layer 203 determines that access to the serving cell is barred, it may inform the upper layer (i.e., NAS layer) of the failure to establish or resume the RRC connection. On the other hand, in implementations where the MAC layer 206 performs the barring check, the procedure to be terminated may be a random access procedure.

According to the access barring or restriction described with reference to Fig. 8, the UE 1 can suppress frequent uplink small data transmissions. This can help to improve the radio utilization efficiency in the cell 21. In other words, the access barring or restriction described with reference to Fig. 8 can provide a solution to the problem of how to suppress frequent uplink small data transmissions. The access barring or restriction described with reference to Fig. 8 can also provide an access barring suitable for UEs that are primarily engaged in uplink data transmission. In other words, the access barring or restriction described with reference to Fig. 8 can provide a solution to the problem of how to provide an access barring suitable for UEs primarily engaged in uplink data transmission.

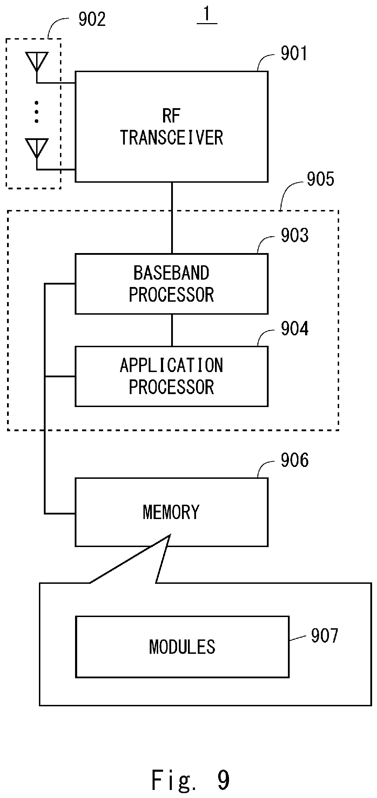

The following provides configuration examples of the UE 1 and the RAN node 2 according to the above described example embodiments. Fig. 9 is a block diagram showing an example configuration of the UE 1. The radio frequency (RF) transceiver 901 performs analog RF signal processing to communicate with a RAN node. The RF transceiver 901 may include a plurality of transceivers. The analog RF signal processing performed by the RF transceiver 901 includes frequency up-conversion, frequency down-conversion, and amplification. The RF transceiver 901 is coupled to the antenna array 902 and the baseband processor 903. The RF transceiver 901 receives modulation symbol data (or OFDM symbol data) from the baseband processor 903, generates a transmission RF signal, and supplies the transmission RF signal to the antenna array 902. The RF transceiver 901 generates a baseband reception signal based on the reception RF signal received by the antenna array 902 and supplies the baseband reception signal to the baseband processor 903. The RF transceiver 901 may include an analog beamformer circuit for beamforming. The analog beamformer circuit includes, for example, a plurality of phase shifters and a plurality of power amplifiers.

The baseband processor 903 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 903 may include signal processing in the Service Data Adaptation Protocol (SDAP) layer, Packet Data Convergence Protocol (PDCP) layer, Radio Link Control (RLC) layer, Medium Access Control (MAC) layer, and Physical (PHY) layer. The control-plane processing performed by the baseband processor 903 may also include processing of Non-Access Stratum (NAS) protocols, Radio Resource Control (RRC) protocols, MAC Control Elements (CEs), and Downlink Control Information (DCIs).

The baseband processor 903 may perform Multiple Input Multiple Output (MIMO) encoding and precoding for beamforming.

The baseband processor 903 may include a modem processor (e.g., Digital Signal Processor (DSP)) that performs the digital baseband signal processing and a protocol stack processor (e.g., Central Processing Unit (CPU) or Micro Processing Unit (MPU)) that performs the control-plane processing. In this case, the protocol stack processor performing the control-plane processing may be integrated with an application processor 904 described later.

The application processor 904 may also be referred to as a CPU, an MPU, a microprocessor, or a processor core. The application processor 904 may include a plurality of processors (processor cores). The application processor 904 loads a system software program (Operating System (OS)) and various application programs (e.g., a voice call application, a web browser, a mailer, a camera operation application, a music player application) from a memory 906 or from another memory (not shown) and executes these programs, thereby providing various functions of the UE 1.

In some implementations, as represented by the dashed line (905) in Fig. 9, the baseband processor 903 and the application processor 904 may be integrated on a single chip. In other words, the baseband processor 903 and the application processor 904 may be implemented in a single System on Chip (SoC) device 905. A SoC device may be referred to as a system Large Scale Integration (LSI) or a chipset.

The memory 906 is a volatile memory or a non-volatile memory, or a combination thereof. The memory 906 may include a plurality of physically independent memory devices. The volatile memory is, for example, Static Random Access Memory (SRAM), Dynamic RAM (DRAM), or a combination thereof. The non-volatile memory may be a Mask Read Only Memory (MROM), an Electrically Erasable Programmable ROM (EEPROM), a flash memory, a hard disk drive, or any combination thereof. The memory 906 may include, for example, an external memory device that can be accessed by the baseband processor 903, the application processor 904, or the SoC 905. The memory 906 may include an internal memory device that is integrated into the baseband processor 903, the application processor 904, or the SoC 905. Further, the memory 906 may include a memory in a Universal Integrated Circuit Card (UICC).

The memory 906 may store one or more software modules (computer programs) 907 including instructions and data for processing by the UE 1 described in the above example embodiments. In some implementations, the baseband processor 903 or the application processor 904 may load the software module(s) 907 from the memory 906 and execute the loaded software module(s) 907, thereby performing the processing of the UE 1 described in the above example embodiments with reference to the drawings.

The control-plane processing and operations performed by the UE 1 described in the above embodiments can be achieved by elements other than the RF transceiver 901 and the antenna array 902, i.e., achieved by the memory 906, which stores the software modules 907, and one or both of the baseband processor 903 and the application processor 904.

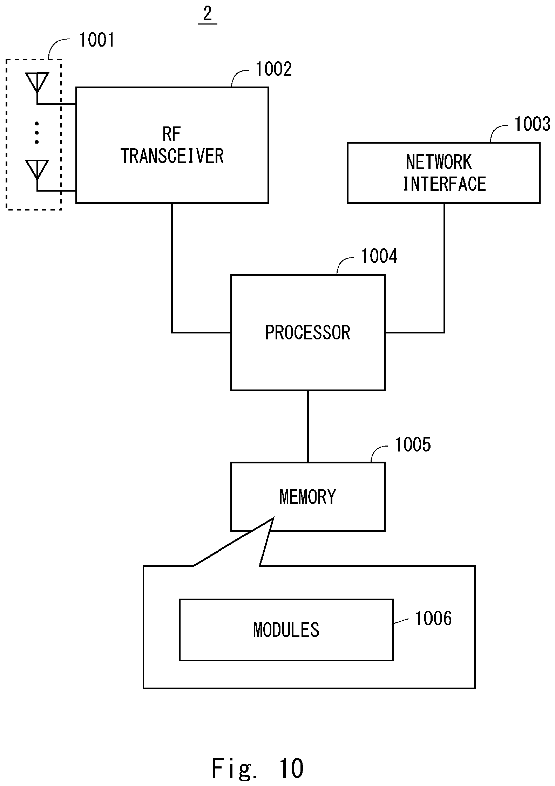

Fig. 10 is a block diagram showing an example configuration of the RAN node 2 according to the above example embodiments. Referring to Fig. 10, the RAN node 2 includes a Radio Frequency transceiver 1001, a network interface 1003, a processor 1004, and a memory 1005. The RF transceiver 1001 performs analog RF signal processing to communicate with UEs including the UE 1. The RF transceiver 1001 may include a plurality of transceivers. The RF transceiver 1001 is coupled to an antenna array 1002 and the processor 1004. The RF transceiver 1001 receives modulated symbol data from the processor 1004, generates a transmission RF signal, and supplies the transmission RF signal to the antenna array 1002. Further, the RF transceiver 1001 generates a baseband reception signal based on a reception RF signal received by the antenna array 1002 and supplies the baseband reception signal to the processor 1004. The RF transceiver 1001 may include an analog beamformer circuit for beam forming. The analog beamformer circuit includes, for example, a plurality of phase shifters and a plurality of power amplifiers.

The network interface 1003 is used to communicate with network nodes (e.g., SN 2, and control and transfer nodes in the core network). The network interface 1003 may include, for example, a network interface card (NIC) conforming to the IEEE 802.3 series.

The processor 1004 performs digital baseband signal processing (i.e., data-plane processing) and control-plane processing for radio communication. The processor 1004 may include a plurality of processors. The processor 1004 may include, for example, a modem processor (e.g., Digital Signal Processor (DSP)) that performs digital baseband signal processing and a protocol stack processor (e.g., Central Processing Unit (CPU) or Micro Processing Unit (MPU) that performs the control-plane processing. The processor 1004 may include a digital beamformer module for beam forming. The digital beamformer module may include a Multiple Input Multiple Output (MIMO) encoder and a precoder.

The memory 1005 is composed of a combination of a volatile memory and a non-volatile memory. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disk drive, or any combination thereof. The memory 1005 may include a storage located that is separate from the processor 1004. In this case, the processor 1004 may access the memory 1005 through the network interface 1003 or an I/O interface not shown.

The memory 1005 may store one or more software modules (computer programs) 1006 including instructions and data for performing the processing of the RAN node 2 described in the above example embodiments. In some implementations, the processor 1004 may be configured to load these software modules 1006 from the memory 1005 and execute the loaded software modules, thereby performing the processing of the RAN node 2 described in the above example embodiments.

If the RAN node 2 is a CU (e.g., gNB-CU) or CU-CP (e.g., gNB-CU-CP), the RAN node 2 does not need to include the RF transceiver 1001 (and antenna array 1002).

As described using Figs. 9 and 10, each of the processors in the UE 1 and RAN node 2 according to the example embodiments described above can execute one or more programs, containing a set of instructions, for causing a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, but not limitation, transitory computer readable media or communication media can include electrical, optical, acoustical, or other form of propagated signals.

The above-described example embodiments are merely examples of applications of the technical ideas obtained by the inventor. These technical ideas are not limited to the above-described example embodiments and various modifications can be made thereto.

For example, the whole or part of the example embodiments disclosed above can be described as, but not limited to, the following supplementary notes.

### (Supplementary Note 1)

A radio terminal comprising:
at least one memory; and
at least one processor coupled to the at least one memory and configured to determine whether access by the radio terminal to a serving cell is barred by comparing a radio state of the serving cell with a radio state of a neighbor cell in the same frequency band as the serving cell.

### (Supplementary Note 2)

The radio terminal according to Supplementary Note 1, wherein the at least one processor is configured to compare a first metric that increases as the radio state of the serving cell improves with a second metric that increases as the radio state of the neighbor cell improves.

### (Supplementary Note 3)

The radio terminal according to Supplementary Note 2, wherein the at least one processor is configured to determine that access to the serving cell is allowed if the second metric minus the first metric is less than a threshold value.

### (Supplementary Note 4)

The radio terminal according to Supplementary Note 3, wherein the threshold value is a positive value.

### (Supplementary Note 5)

The radio terminal according to Supplementary Note 3 or 4, wherein the at least one processor is configured to receive via broadcast from the serving cell an information element indicating the threshold value.

### (Supplementary Note 6)

The radio terminal according to any one of Supplementary Notes 2 to 5, wherein
the first metric is related to a received signal power or received signal quality of a downlink signal of the serving cell, and
the second metric is related to a received signal power or received signal quality of a downlink signal of the neighbor cell.

### (Supplementary Note 7)

The radio terminal according to any one of Supplementary Notes 2 to 6, wherein each of the first metric and the second metric includes or is derived from Reference Signal Received Power (RSRP), Reference Signal Received Quality (RSRQ), or signal-to-interference-plus-noise power ratio (SINR).

### (Supplementary Note 8)

The radio terminal according to Supplementary Note 1, wherein the at least one processor is configured to determine that access to the serving cell is allowed if a third metric, which increases as the radio state of the serving cell improves and decreases as the radio state of the neighbor cell improves, is greater than a threshold value.

### (Supplementary Note 9)

The radio terminal according to Supplementary Note 8, wherein the third metric includes or is derived from Reference Signal Received Quality (RSRQ) or signal-to-interference-plus-noise power ratio (SINR) of a downlink signal of the serving cell.

### (Supplementary Note 10)

The radio terminal according to any one of Supplementary Notes 1 to 9, wherein the at least one processor is configured to provide a Radio Resource Control (RRC) layer function,
wherein the RRC layer function is configured to perform the determination.

### (Supplementary Note 11)

The radio terminal according to Supplementary Note 10, wherein the RRC function is configured to perform the determination when an upper layer requests establishment or resumption of an RRC connection.

### (Supplementary Note 12)

The radio terminal according to any one of Supplementary Notes 1 to 9, wherein the at least one processor is configured to provide a Medium Access Control (MAC) layer function,
wherein the MAC layer function is configured to perform the determination.

### (Supplementary Note 13)

The radio terminal according to Supplementary Note 12, wherein the MAC layer is configured to perform the determination when the MAC layer function is triggered to initiate a random access procedure.

### (Supplementary Note 14)

The radio terminal according to Supplementary Note 12 or 13, wherein the MAC layer is configured to perform the determination when initiating a random access procedure.

### (Supplementary Note 15)

A method performed by a radio terminal, the method comprising:
determining whether access by the radio terminal to a serving cell is barred by comparing a radio state of the serving cell with a radio state of a neighbor cell in the same frequency band as the serving cell.

### (Supplementary Note 16)

A program for causing a computer to perform a method for a radio terminal, the method comprising:
determining whether access by the radio terminal to a serving cell is barred by comparing a radio state of the serving cell with a radio state of a neighbor cell in the same frequency band as the serving cell.

### (Supplementary Note 17)

A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

### (Supplementary Note 18)

The radio access network node according to Supplementary Note 17, wherein the radio terminal is configured to compare a first metric that increases as the radio state of the serving cell improves with a second metric that increases as the radio state of the neighbor cell improves.

### (Supplementary Note 19)

The radio access network node according to Supplementary Note 18, wherein the radio terminal is configured to determine that access to the serving cell is allowed if the second metric minus the first metric is less than the threshold value.

### (Supplementary Note 20)

The radio access network node according to Supplementary Note 19, wherein the threshold value is a positive value.

### (Supplementary Note 21)

A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

### (Supplementary Note 22)

A program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

### (Supplementary Note 23)

A radio terminal comprising:
at least one memory; and
at least one processor coupled to the at least one memory and configured to determine whether access by the radio terminal to a serving cell is barred by comparing a current radio state of the serving cell with a historical radio state of the serving cell.

### (Supplementary Note 24)

The radio terminal according to Supplementary Note 23, wherein the at least one processor is configured to compare a current value of a metric that increases as a radio state of the serving cell improves with a reference value based on a historical value of the metric.

### (Supplementary Note 25)

The radio terminal according to Supplementary Note 24, wherein the at least one processor is configured to determine that access to the serving cell is allowed if the reference value minus the current value is less than a threshold value.

### (Supplementary Note 26)

The radio terminal according to Supplementary Note 25, wherein the threshold value is a positive value.

### (Supplementary Note 27)

The radio terminal according to Supplementary Note 25 or 26, wherein the at least one processor is configured to set the reference value to the current value if the current value is greater than the reference value or if the reference value minus the current value has been above the threshold value for a predetermined period of time.

### (Supplementary Note 28)

The radio terminal according to any one of Supplementary Notes 25 to 27, wherein the at least one processor is configured to receive via broadcast from the serving cell an information element indicating the threshold value.

### (Supplementary Note 29)

The radio terminal according to any one of Supplementary Notes 24 to 28, wherein the metric is related to a received signal power or received signal quality of a downlink signal of the serving cell.

### (Supplementary Note 30)

The radio terminal according to any one of Supplementary Notes 24 to 29, wherein the metric includes or is derived from Reference Signal Received Power (RSRP), Reference Signal Received Quality (RSRQ), or signal-to-interference-plus-noise power ratio (SINR).

### (Supplementary Note 31)

The radio terminal according to any one of Supplementary Notes 23 to 30, wherein the at least one processor is configured to provide a Radio Resource Control (RRC) layer function,
wherein the RRC layer function is configured to perform the determination.

### (Supplementary Note 32)

The radio terminal according to Supplementary Note 31, wherein the RRC function is configured to perform the determination when an upper layer requests establishment or resumption of an RRC connection.

### (Supplementary Note 33)

The radio terminal according to any one of Supplementary Notes 23 to 30, wherein the at least one processor is configured to provide a Medium Access Control (MAC) layer function,
wherein the MAC layer function is configured to perform the determination.

### (Supplementary Note 34)

The radio terminal according to Supplementary Note 33, wherein the MAC layer is configured to perform the determination when the MAC layer function is triggered to initiate a random access procedure.

### (Supplementary Note 35)

The radio terminal according to Supplementary Note 33 or 34, wherein the MAC layer is configured to perform the determination when initiating a random access procedure.

### (Supplementary Note 36)

A method performed by a radio terminal, the method comprising:
determining whether access by the radio terminal to a serving cell is barred by comparing a current radio state of the serving cell with a historical radio state of the serving cell.

### (Supplementary Note 37)

A program for causing a computer to perform a method for a radio terminal, the method comprising:
determining whether access by the radio terminal to a serving cell is barred by comparing a current radio state of the serving cell with a historical radio state of the serving cell.

### (Supplementary Note 38)

A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

### (Supplementary Note 39)

The radio access network node according to Supplementary Note 38, wherein the radio terminal is configured to compare a current value of a metric that increases as a radio state of the serving cell improves with a reference value based on a historical value of the metric.

### (Supplementary Note 40)

The radio access network node according to Supplementary Note 39, wherein the radio terminal is configured to determine that access to the serving cell is allowed if the reference value minus the current value is less than the threshold value.

### (Supplementary Note 41)

The radio access network node according to Supplementary Note 40, wherein the threshold value is a positive value.

### (Supplementary Note 42)

A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

### (Supplementary Note 43)

A program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

### (Supplementary Note 44)

A radio terminal comprising:
at least one memory; and
at least one processor coupled to the at least one memory, wherein
the at least one processor is configured to receive, via broadcast from a first cell, one or more information elements indicating one or both of S_{SearchThresholdP} and S_{SearchThresholdQ},
the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection,
the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection, and
the at least one processor is configured to use one or both of the S_{SearchThresholdP} and the S_{SearchThresholdQ} when the radio terminal uses the first cell as the serving cell, also to determine whether access by the radio terminal to the serving cell is barred.

### (Supplementary Note 45)

The radio terminal according to Supplementary Note 44, wherein the at least one processor is configured to determine that access to the serving cell is allowed if the Srxlev is greater than the S_{SearchThresholdP}.

### (Supplementary Note 46)

The radio terminal according to Supplementary Note 44, wherein the at least one processor is configured to determine that access to the serving cell is allowed if the Srxlev is greater than the S_{SearchThresholdP} and Squal is greater than the S_{SearchThresholdQ}.

### (Supplementary Note 47)

The radio terminal according to any one of Supplementary Notes 44 to 46, wherein the at least one processor is configured to provide a Radio Resource Control (RRC) layer function,
wherein the RRC layer function is configured to perform the determination of whether access by the radio terminal to the serving cell is barred.

### (Supplementary Note 48)

The radio terminal according to any one of Supplementary Notes 44 to 46, wherein the at least one processor is configured to provide a Medium Access Control (MAC) layer function,
wherein the MAC layer function is configured to perform the determination of whether access by the radio terminal to the serving cell is barred.

### (Supplementary Note 49)

The radio terminal according to Supplementary Note 48, wherein the MAC layer is configured to perform the determination of whether access by the radio terminal to the serving cell is barred when the MAC layer function is triggered to initiate a random access procedure.

### (Supplementary Note 50)

A method performed by a radio terminal, the method comprising:
receiving, via broadcast from a first cell, one or more information elements indicating one or both of S_{SearchThresholdP} and S_{SearchThresholdQ}, wherein
   the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection, and
   the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection; and
using one or both of the S_{SearchThresholdP} and the S_{SearchThresholdQ} when the radio terminal uses the first cell as the serving cell, also to determine whether access by the radio terminal to the serving cell is barred.

### (Supplementary Note 51)

A program for causing a computer to perform a method for a radio terminal, the method comprising:
receiving, via broadcast from a first cell, one or more information elements indicating one or both of S_{SearchThresholdP} and S_{SearchThresholdQ}, wherein
   the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection, and
   the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection; and
using one or both of the S_{SearchThresholdP} and the SsearchThresholdQ when the radio terminal uses the first cell as the serving cell, also to determine whether access by the radio terminal to the serving cell is barred.

### (Supplementary Note 52)

A radio terminal comprising:
at least one memory; and
at least one processor coupled to the at least one memory and configured to determine whether access by the radio terminal to a serving cell is barred based on an amount of data stored in an uplink buffer of the radio terminal.

### (Supplementary Note 53)

The radio terminal according to Supplementary Note 52, wherein the at least one processor is configured to determine that access to the serving cell is allowed if the amount of data is greater than a threshold value.

### (Supplementary Note 54)

The radio terminal according to Supplementary Note 53, wherein the at least one processor is configured to receive via broadcast from the serving cell an information element indicating the threshold value.

### (Supplementary Note 55)

The radio terminal according to any one of Supplementary Notes 52 to 54, wherein the at least one processor is configured to provide a Radio Resource Control (RRC) layer function,
wherein the RRC layer function is configured to perform the determination.

### (Supplementary Note 56)

The radio terminal according to Supplementary Note 55, wherein the RRC function is configured to perform the determination when an upper layer requests establishment or resumption of an RRC connection.

### (Supplementary Note 57)

The radio terminal according to any one of Supplementary Notes 52 to 54, wherein the at least one processor is configured to provide a Medium Access Control (MAC) layer function,
wherein the MAC layer function is configured to perform the determination.

### (Supplementary Note 58)

The radio terminal according to Supplementary Note 57, wherein the MAC layer is configured to perform the determination when the MAC layer function is triggered to initiate a random access procedure.

### (Supplementary Note 59)

A method performed by a radio terminal, the method comprising:
determining whether access by the radio terminal to a serving cell is barred based on an amount of data stored in an uplink buffer of the radio terminal.

### (Supplementary Note 60)

A program for causing a computer to perform a method for a radio terminal, the method comprising:
determining whether access by the radio terminal to a serving cell is barred based on an amount of data stored in an uplink buffer of the radio terminal.

### (Supplementary Note 61)

A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.

### (Supplementary Note 62)

The radio access network node according to Supplementary Note 61, wherein the radio terminal is configured to determine that access to the serving cell is allowed if the amount of data is greater than the threshold value.

### (Supplementary Note 63)

A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.

### (Supplementary Note 64)

A program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.

This application is based upon and claims the benefit of priority from Japanese Patent Application No. 2021-168191, filed on October 13, 2021, the disclosure of which is incorporated herein in its entirety by reference.

### Reference Signs List

- 1: UE
- 2, 3: RAN Node
- 903: Baseband Processor
- 904: Application Processor
- 906: Memory
- 907: Modules
- 1004: Processor
- 1005: Memory
- 1006: Modules

## Claims

1. A radio terminal comprising:
at least one memory; and
at least one processor coupled to the at least one memory and configured to determine whether access by the radio terminal to a serving cell is barred by comparing a radio state of the serving cell with a radio state of a neighbor cell in the same frequency band as the serving cell.

2. The radio terminal according to claim 1, wherein the at least one processor is configured to compare a first metric that increases as the radio state of the serving cell improves with a second metric that increases as the radio state of the neighbor cell improves.

3. The radio terminal according to claim 2, wherein the at least one processor is configured to determine that access to the serving cell is allowed if the second metric minus the first metric is less than a threshold value.

4. The radio terminal according to claim 3, wherein the threshold value is a positive value.

5. The radio terminal according to claim 3 or 4, wherein the at least one processor is configured to receive via broadcast from the serving cell an information element indicating the threshold value.

6. The radio terminal according to any one of claims 2 to 5, wherein
the first metric is related to a received signal power or received signal quality of a downlink signal of the serving cell, and
the second metric is related to a received signal power or received signal quality of a downlink signal of the neighbor cell.

7. The radio terminal according to any one of claims 2 to 6, wherein each of the first metric and the second metric includes or is derived from Reference Signal Received Power (RSRP), Reference Signal Received Quality (RSRQ), or signal-to-interference-plus-noise power ratio (SINR).

8. The radio terminal according to claim 1, wherein the at least one processor is configured to determine that access to the serving cell is allowed if a third metric, which increases as the radio state of the serving cell improves and decreases as the radio state of the neighbor cell improves, is greater than a threshold value.

9. The radio terminal according to claim 8, wherein the third metric includes or is derived from Reference Signal Received Quality (RSRQ) or signal-to-interference-plus-noise power ratio (SINR) of a downlink signal of the serving cell.

10. The radio terminal according to any one of claims 1 to 9, wherein the at least one processor is configured to provide a Radio Resource Control (RRC) layer function,
wherein the RRC layer function is configured to perform the determination.

11. The radio terminal according to claim 10, wherein the RRC function is configured to perform the determination when an upper layer requests establishment or resumption of an RRC connection.

12. The radio terminal according to any one of claims 1 to 9, wherein the at least one processor is configured to provide a Medium Access Control (MAC) layer function,
wherein the MAC layer function is configured to perform the determination.

13. The radio terminal according to claim 12, wherein the MAC layer is configured to perform the determination when the MAC layer function is triggered to initiate a random access procedure.

14. The radio terminal according to claim 12 or 13, wherein the MAC layer is configured to perform the determination when initiating a random access procedure.

15. A method performed by a radio terminal, the method comprising:
determining whether access by the radio terminal to a serving cell is barred by comparing a radio state of the serving cell with a radio state of a neighbor cell in the same frequency band as the serving cell.

16. A non-transitory computer-readable medium storing a program for causing a computer to perform a method for a radio terminal, the method comprising:
determining whether access by the radio terminal to a serving cell is barred by comparing a radio state of the serving cell with a radio state of a neighbor cell in the same frequency band as the serving cell.

17. A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

18. The radio access network node according to claim 17, wherein the radio terminal is configured to compare a first metric that increases as the radio state of the serving cell improves with a second metric that increases as the radio state of the neighbor cell improves.

19. The radio access network node according to claim 18, wherein the radio terminal is configured to determine that access to the serving cell is allowed if the second metric minus the first metric is less than the threshold value.

20. The radio access network node according to claim 19, wherein the threshold value is a positive value.

21. A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

22. A non-transitory computer-readable medium storing a program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a radio state of the serving cell with a radio state of a neighbor cell in the same frequency band as the serving cell.

23. A radio terminal comprising:
at least one memory; and
at least one processor coupled to the at least one memory and configured to determine whether access by the radio terminal to a serving cell is barred by comparing a current radio state of the serving cell with a historical radio state of the serving cell.

24. The radio terminal according to claim 23, wherein the at least one processor is configured to compare a current value of a metric that increases as a radio state of the serving cell improves with a reference value based on a historical value of the metric.

25. The radio terminal according to claim 24, wherein the at least one processor is configured to determine that access to the serving cell is allowed if the reference value minus the current value is less than a threshold value.

26. The radio terminal according to claim 25, wherein the threshold value is a positive value.

27. The radio terminal according to claim 25 or 26, wherein the at least one processor is configured to set the reference value to the current value if the current value is greater than the reference value or if the reference value minus the current value has been above the threshold value for a predetermined period of time.

28. The radio terminal according to any one of claims 25 to 27, wherein the at least one processor is configured to receive via broadcast from the serving cell an information element indicating the threshold value.

29. The radio terminal according to any one of claims 24 to 28, wherein the metric is related to a received signal power or received signal quality of a downlink signal of the serving cell.

30. The radio terminal according to any one of claims 24 to 29, wherein the metric includes or is derived from Reference Signal Received Power (RSRP), Reference Signal Received Quality (RSRQ), or signal-to-interference-plus-noise power ratio (SINR).

31. The radio terminal according to any one of claims 23 to 30, wherein the at least one processor is configured to provide a Radio Resource Control (RRC) layer function,
wherein the RRC layer function is configured to perform the determination.

32. The radio terminal according to claim 31, wherein the RRC function is configured to perform the determination when an upper layer requests establishment or resumption of an RRC connection.

33. The radio terminal according to any one of claims 23 to 30, wherein the at least one processor is configured to provide a Medium Access Control (MAC) layer function,
wherein the MAC layer function is configured to perform the determination.

34. The radio terminal according to claim 33, wherein the MAC layer is configured to perform the determination when the MAC layer function is triggered to initiate a random access procedure.

35. The radio terminal according to claim 33 or 34, wherein the MAC layer is configured to perform the determination when initiating a random access procedure.

36. A method performed by a radio terminal, the method comprising:
determining whether access by the radio terminal to a serving cell is barred by comparing a current radio state of the serving cell with a historical radio state of the serving cell.

37. A non-transitory computer-readable medium storing a program for causing a computer to perform a method for a radio terminal, the method comprising:
determining whether access by the radio terminal to a serving cell is barred by comparing a current radio state of the serving cell with a historical radio state of the serving cell.

38. A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

39. The radio access network node according to claim 38, wherein the radio terminal is configured to compare a current value of a metric that increases as a radio state of the serving cell improves with a reference value based on a historical value of the metric.

40. The radio access network node according to claim 39, wherein the radio terminal is configured to determine that access to the serving cell is allowed if the reference value minus the current value is less than the threshold value.

41. The radio access network node according to claim 40, wherein the threshold value is a positive value.

42. A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

43. A non-transitory computer-readable medium storing a program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred by comparing a current radio state of the serving cell with a historical radio state of the serving cell.

44. A radio terminal comprising:
at least one memory; and
at least one processor coupled to the at least one memory, wherein
the at least one processor is configured to receive, via broadcast from a first cell, one or more information elements indicating one or both of S_{SearchThresholdP} and S_{SearchThresholdQ},
the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection,
the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection, and
the at least one processor is configured to use one or both of the S_{SearchThreshoidP} and the S_{SearchThresholdQ} when the radio terminal uses the first cell as the serving cell, also to determine whether access by the radio terminal to the serving cell is barred.

45. The radio terminal according to claim 44, wherein the at least one processor is configured to determine that access to the serving cell is allowed if the Srxlev is greater than the S_{SearchThresholdP}.

46. The radio terminal according to claim 44, wherein the at least one processor is configured to determine that access to the serving cell is allowed if the Srxlev is greater than the S_{SearchThresholdP} and Squal is greater than the S_{SearchThresholdQ}.

47. The radio terminal according to any one of claims 44 to 46, wherein the at least one processor is configured to provide a Radio Resource Control (RRC) layer function,
wherein the RRC layer function is configured to perform the determination of whether access by the radio terminal to the serving cell is barred.

48. The radio terminal according to any one of claims 44 to 46, wherein the at least one processor is configured to provide a Medium Access Control (MAC) layer function,
wherein the MAC layer function is configured to perform the determination of whether access by the radio terminal to the serving cell is barred.

49. The radio terminal according to claim 48, wherein the MAC layer is configured to perform the determination of whether access by the radio terminal to the serving cell is barred when the MAC layer function is triggered to initiate a random access procedure.

50. A method performed by a radio terminal, the method comprising:
receiving, via broadcast from a first cell, one or more information elements indicating one or both of S_{SearchThreshoidP} and S_{SearchThresholdQ}, wherein
the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection, and
the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection; and
using one or both of the S_{SearchThresholdP} and the S_{SearchThresholdQ} when the radio terminal uses the first cell as the serving cell, also to determine whether access by the radio terminal to the serving cell is barred.

51. A non-transitory computer-readable medium storing a program for causing a computer to perform a method for a radio terminal, the method comprising:
receiving, via broadcast from a first cell, one or more information elements indicating one or both of S_{SearchThreshoidP} and S_{SearchThresholdQ}, wherein
the S_{SearchThresholdP} is a threshold value to be compared by the radio terminal, when the radio terminal uses the first cell as a serving cell, with a cell selection RX level value, Srxlev, of the serving cell to determine whether or not the radio terminal is to perform a neighbor cell measurement for cell reselection, and
the S_{SearchThresholdQ} is a threshold value to be compared by the radio terminal, when the radio terminal uses the first cell as the serving cell, with a cell selection quality value, Squal, of the serving cell to determine whether or not the radio terminal is to perform the neighbor cell measurement for cell reselection; and
using one or both of the S_{SearchThresholdP} and the S_{SearchThresholdQ} when the radio terminal uses the first cell as the serving cell, also to determine whether access by the radio terminal to the serving cell is barred.

52. A radio terminal comprising:
at least one memory; and
at least one processor coupled to the at least one memory and configured to determine whether access by the radio terminal to a serving cell is barred based on an amount of data stored in an uplink buffer of the radio terminal.

53. The radio terminal according to claim 52, wherein the at least one processor is configured to determine that access to the serving cell is allowed if the amount of data is greater than a threshold value.

54. The radio terminal according to claim 53, wherein the at least one processor is configured to receive via broadcast from the serving cell an information element indicating the threshold value.

55. The radio terminal according to any one of claims 52 to 54, wherein the at least one processor is configured to provide a Radio Resource Control (RRC) layer function,
wherein the RRC layer function is configured to perform the determination.

56. The radio terminal according to claim 55, wherein the RRC function is configured to perform the determination when an upper layer requests establishment or resumption of an RRC connection.

57. The radio terminal according to any one of claims 52 to 54, wherein the at least one processor is configured to provide a Medium Access Control (MAC) layer function,
wherein the MAC layer function is configured to perform the determination.

58. The radio terminal according to claim 57, wherein the MAC layer is configured to perform the determination when the MAC layer function is triggered to initiate a random access procedure.

59. A method performed by a radio terminal, the method comprising:
determining whether access by the radio terminal to a serving cell is barred based on an amount of data stored in an uplink buffer of the radio terminal.

60. A non-transitory computer-readable medium storing a program for causing a computer to perform a method for a radio terminal, the method comprising:
determining whether access by the radio terminal to a serving cell is barred based on an amount of data stored in an uplink buffer of the radio terminal.

61. A radio access network node comprising:
at least one memory; and
at least one processor coupled to the at least one memory and configured to broadcast in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.

62. The radio access network node according to claim 61, wherein the radio terminal is configured to determine that access to the serving cell is allowed if the amount of data is greater than the threshold value.

63. A method performed by a radio access network node, the method comprising:
broadcasting in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.

64. A non-transitory computer-readable medium storing a program for causing a computer to perform a method for a radio access network node, the method comprising:
broadcasting in a first cell an information element indicating a threshold value,
wherein the threshold value is used by a radio terminal using the first cell as a serving cell to determine whether access by the radio terminal to the serving cell is barred based on an amount of data stored in an uplink buffer of the radio terminal.
